# EUROPÄISCHE PATENTSCHRIFT

(11) **EP 2 955 065 B1**
(45) Veröffentlichungstag und Bekanntmachung des Hinweises auf die Patenterteilung: **10.06.2020**
(21) Anmeldenummer: 15001215.1
(22) Anmeldetag: 24.04.2015
(51) Int. Cl.: B60R 1/00

(54) **FAHRZEUG, INSBESONDERE NUTZFAHRZEUG, MIT EINEM KAMERA-MONITOR-SYSTEM ALS SPIEGELERSATZSYSTEM SOWIE VERFAHREN ZUR BETÄTIGUNG EINES DERARTIGEN KAMERA-MONITOR-SYSTEMS**
VEHICLE, IN PARTICULAR COMMERCIAL VEHICLE, WITH A CAMERA MONITOR SYSTEM AS MIRROR REPLACEMENT SYSTEM AND METHOD FOR ACTUATING SUCH A CAMERA MONITOR SYSTEM
VÉHICULE, EN PARTICULIER VÉHICULE UTILITAIRE, DOTÉ D'UN SYSTÈME MONITEUR-CAMÉRA EN TANT QUE SYSTÈME DE REMPLACEMENT DE RÉTROVISEUR ET PROCÉDÉ D'ACTIONNEMENT D'UN TEL SYSTÈME MONITEUR-CAMÉRA

(30) Priorität: 13.05.2014 DE 102014006961
(43) Veröffentlichungstag der Anmeldung: 16.12.2015
(73) Patentinhaber: MAN Truck & Bus SE, 80995 München (DE)
(72) Erfinder: Jerg, Stefan, 80805 München (DE); Zaindl, Albert, 85302 Gerolsbach (DE)
(74) Vertreter: Liebl, Thomas

(56) Entgegenhaltungen:
- DE-A1- 10 204 764
- DE-A1- 10 234 483
- DE-A1-102010 013 338
- DE-U1- 20 017 064
- US-A- 5 027 200

## Beschreibung

Die Erfindung betrifft ein Verfahren zur Betätigung eines Kamera-Monitor-Systems als Spiegelersatzsystem an einem Fahrzeug, insbesondere an einem Nutzfahrzeug, nach dem Oberbegriff des Anspruchs 1.

Zur Darstellung eines rückwärtigen Sichtfeldes in einem Fahrzeugumfeld sind fahrzeugaußenseitige Rückspiegelanordnungen allgemein bekannt. Beispielsweise ist für eine indirekte Bilddarstellung eines rückwärtigen Sichtfeldes für neue, größere Nutzfahrzeuge (Fahrzeuge der Klassen N2 und N3) im EG-Raum beifahrerseitig eine Spiegelanordnung aus einem Hauptaußenspiegel, einem Weitwinkelspiegel und einem Rampenspiegel vorgeschrieben (EG-Richtlinie 2003/97/EG).

Solche Spiegelanordnungen sind ungünstig groß und gewichtsintensiv. Zudem besteht ein hohes Schadenspotential durch abgefahrene Spiegel, wobei dafür sowohl eine Gefahr von entgegenkommenden Fahrzeugen als auch von Infrastrukturhindernissen, wie Wände, Straßenschilder, stehende Fahrzeuge, etc. ausgeht. Die Einzelspiegel können hinsichtlich ihrer Ausrichtung eingestellt werden; die Halterung für die Spiegelanordnung ist jedoch bedingt durch das relativ große Gewicht der Spiegelanordnung ortsfest am Fahrzeug befestigt.

An Fahrzeugen werden bereits in allgemein bekannter Weise Kamera-Monitor-Systeme eingesetzt. Beispielsweise sind Rückfahrkameras als Einparkhilfen bei Personenkraftwagen bekannt, die beim Einlegen eines Rückwärtsgangs aktiviert werden und auf einem Monitor im peripheren Sichtbereich eines Fahrers einen Sichtbereich direkt hinter dem Fahrzeug abbilden. Ähnlich sind für LKWs Kamera-Monitor-Systeme bekannt, mit einer oder mehreren Kameras die zur Unterstützung bei Rangiervorgängen Teile des Fahrzeugumfelds auf einem Monitor abbilden.

Ein Kamera-Monitor-System kann als Spiegelersatzsystem auch eine linksseitige und/oder rechtsseitige Außen-Rückspiegel-Anordnung, insbesondere eine Außen-Rückspiegel-Anordnung eines LKW bevorzugt im besonders sicherheitskritischen beifahrerseitigen Sichtfeld ersetzen. In einer gattungsgemäßen Anordnung ist dazu anstelle der Außenspiegelanordnung wenigstens eine nach rückwärts gerichtete Kamera beidseitig oder einseitig außen am Fahrzeug, insbesondere im vorderen, oberen Eckbereich eines Fahrerhauses eines Nutzfahrzeugs, mittels einer Kamerahalterung ortsfest angeordnet, wodurch das Kamerasichtfeld fest vorgegeben ist.

Aus der DE 200 17 064 U1 ist ein Fahrzeug mit einem Kamera-Monitor-System bekannt, bei dem die Kamera mittels einer Stelleinrichtung in verschiedene Abstands-Positionen bezüglich des Fahrzeugs verlagert werden kann. Die Kamera kann dabei beispielsweise manuell, elektrisch, pneumatisch oder hydraulisch verlagert werden.

Die weitere DE 102 34 483 A1 offenbart einen Kameraaufbau für ein Nutzfahrzeug mit Kastenaufbau, bei dem durch eine Bewegungsvorrichtung eine Kamera durch eine Öffnung im Kastenaufbau zumindest teilweise vom Inneren des Kastenaufbaus so nach außen bewegt und/oder die Öffnung im Kastenaufbau so geöffnet werden kann, dass die Kamera bei aktivierter Bewegungsvorrichtung einen bestimmten Sichtwinkel auf einen rückwärtigen Bereich hinter dem Nutzfahrzeug aufnehmen kann.

Aus der US 5 027 200 A ist ein Fahrzeug mit einem Kamera-Monitor-System bekannt, bei dem das Kamera-Monitor-System ein Spiegelersatzsystem ausbildet. Die Kameras des Kamera-Monitor-Systems können hier mittels einer zugeordneten Stelleinrichtung in verschiedene Abstands-Positionen bezüglich des Fahrzeugs verlagert werden.

Aufgabe der Erfindung ist die Bereitstellung eines Verfahrens zum Betätigen eines als Spiegelersatzsystems ausgebildeten Kamera-Monitor-Systems, mit dem der Kameraeinsatz erweitert wird.

Diese Aufgabe wird gelöst mit den Merkmalen des unabhängigen Patentanspruchs 1. Vorteilhafte Ausgestaltungen sind Gegenstand der Unteransprüche.

Gemäß Anspruch 1 wird ein Verfahren zur Betätigung eines Kamera-Monitor-Systems als Spiegelersatzsystem an einem Fahrzeug, insbesondere an einem Nutzfahrzeug, beansprucht, mit wenigstens einer Kamera, die beidseitig oder einseitig außen am Fahrzeug in Fahrzeuglängsrichtung gesehen nach rückwärts gerichtet ist. Die wenigstens eine Kamera ist, insbesondere im vorderen oberen Eckbereich eines Fahrerhauses eines Nutzfahrzeugs, mittels einer Kamerahalterung befestigt. Zudem ist vorgesehen, dass die Kamerahalterung eine steuerbare Stelleinrichtung aufweist, mit der die wenigstens eine rückwärts gerichtete Kamera situationsabhängig in verschiedene Abstands-Positionen bezüglich des Fahrzeugs verlagert wird.

Die Steuereinheit für die steuerbare Stelleinrichtung kann dabei manuell vom Fahrer mittels eines Eingabetastatur ein- und ausschaltbar sowie für eine Verstellung der Abstandsposition aktivierbar sein. Dazu können bevorzugt auf der Eingabetastatur in Schrift- und/oder Symbolform verstellrelevante Situationen für eine zugeordnete Positionsverstellung der Kamera angegeben sein, so dass der Fahrer intuitiv, schnell und einfach eine geeignete Kameraverstellung vornehmen kann.

Zudem oder alternativ kann die Steuereinheit für die steuerbare Stelleinrichtung auch automatisch zu einer Verstellung der Kameraposition aktivierbar sein. Verstellrelevante Situationen können dabei mittels Sensoren und/oder durch Auswertung fahrzeugseitiger Betriebsparameter erfasst und erkannt werden, worauf dann die Stelleinrichtung mittels der Steuereinheit entsprechend eingestellt wird.

Konstruktiv einfach und kostengünstig kann die Stelleinrichtung als Linear-Stelleinrichtung ausgeführt sein bzw. vorzugsweise in etwa quer und/oder horizontal zum Fahrzeug ausgerichtet sein. Die Kamera soll mittels der Linear-Stelleinrichtung bezüglich des Fahrzeugs elektrisch und/oder hydraulisch und/oder pneumatisch aus- und einfahrbar sein. Dazu kann die Linear-Stelleinrichtung insbesondere teleskopierbar sein und/oder die Kamera ist verschiebbar an der Linear-Stelleinrichtung gehalten oder die Linear-Stelleinrichtung selbst ist verschiebbar, zum Beispiel ins Fahrzeug einschiebbar angeordnet.

Alternativ kann die Stelleinrichtung als Schwenk-Stelleinrichtung ausgeführt sein, mit der die Kamera für eine Abstandsänderung zum Fahrzeug hin- und weggeschwenkt werden kann. Konstruktiv wird dazu vorgeschlagen, dass die Schwenk-Stelleinrichtung eine Gelenkstange aufweist, von der ein Ende über ein Stellgelenk mit dem Fahrzeug und das andere Ende mit einem Stellgelenk mit der Kamera verbunden ist. Je nach den Gegebenheiten kann auch eine Kombination aus einer Linear-Stelleinrichtung und einer Schwenk-Stelleinrichtung eingesetzt werden.

Bei einer Positionsverstellung der Kamera, insbesondere in Verbindung mit einer SchwenkVerstellung kann sich die Kameraausrichtung gegebenenfalls so ändern, dass ohne zusätzliche Maßnahmen ein gewünschtes rückwärtiges Sichtfeld nicht mehr optimal erfasst wird. Erfindungsgemäß wird daher vorgeschlagen, dass auch die Kameraausrichtung gesteuert einstellbar ist, dergestalt, dass bei einer Verstellung der Kameraposition automatisch und gekoppelt auch die Kameraausrichtung geeignet nachjustiert wird, wenn die Kamera aus einer betriebsmäßigen Standardposition für den normalen Fahrbetrieb in eine andere Sichtposition verlagert wird.

Im folgenden werden bevorzugte Verstellsituationen in Verbindung mit der Situationserfassung und der zugeordneten, mittels der Stelleinrichtung eingestellten Kameraposition erläutert:
Wenn das Fahrzeug, insbesondere ein Nutzfahrzeug, außer Betrieb gesetzt ist, wird die Kamera ganz oder teilweise in ein Aufnahmegehäuse am Fahrzeug in eine Ruhestellung eingefahren. Eine solche Situation kann beispielsweise bei abgezogenem Zündschlüssel erkannt und die Stelleinrichtung entsprechend angesteuert werden. Das Aufnahmegehäuse kann dabei vorzugsweise derart ausgebildet sein, dass die Kamera vor negativen Wettereinflüssen geschützt ist. So kann die Kamera beispielsweise vor Überhitzung, Vereisung oder Verschmutzung geschützt werden. Bei mehreren fahrzeugangebrachten Kameras, insbesondere bei beidseitig angebrachten Spiegelersatzsystemen werden vorzugsweise alle Kameras entsprechend in zugeordnete Aufnahmegehäuse eingefahren. Bei einer erneuten Aktivierung des Fahrzeugs, insbesondere bei eingestecktem Zündschlüssel wird die Kamera mittels der Stelleinrichtung aus dem Aufnahmegehäuse wieder in eine vorbestimmte Fahrstellung ausgefahren. Damit wird vorteilhaft erreicht, dass die Kamera am stehenden Fahrzeug nicht gestohlen, durch Vandalismus nicht beschädigt oder zerstört sowie von anderen Verkehrsteilnehmern abgefahren werden kann. Zusätzlich oder alternativ ist das Aktivieren des Systems unabhängig von der Aktivierung des Fahrzeugs auch durch den Fahrer, beispielsweise mit einem Tastknopf im Fahrzeug möglich. Insbesondere kann damit der Fahrer den Verkehr bei ruhendem Fahrzeug kontrollieren und dieses sicher verlassen.

Eine weitere verstellrelevante Situation liegt vor, wenn im Fahrbetrieb die Gefahr des Abfahrens einer Kamera besteht: Zur Feststellung einer solchen Gefahr können an sich bekannte Sensoren, zum Beispiel Ultraschall-Sensoren oder optische Sensoren, verwendet oder mitverwendet werden. Wenn eine solche Gefahr vorliegt und erkannt wurde, insbesondere von entgegenkommenden Fahrzeugen oder einer Infrastruktur, wird die der gefährdeten Kamera zugeordnete Stelleinrichtung so angesteuert, dass die Kamera ein Stück zum Fahrzeug hin aus dem möglichen Kollisionsbereich verlagert wird.

Eine weitere wesentliche, verstellrelevante Situation liegt vor, wenn bei einem Gespannbetrieb aus Zugfahrzeug und Anhänger/Auflieger eine Kurvenfahrt und/oder ein Anhänger/Auflieger, der breiter als das Zugfahrzeug ist, erfasst und erkannt wird. Dann wird die Stelleinrichtung so angesteuert, dass die Kamera von einer Standardposition (ohne Gespannbetrieb) in eine weiter außen liegende Position verlagert wird. Damit wird vorteilhaft ein sonst nicht einsehbares Sichtfeld für den Fahrer sichtbar gemacht und erweitert.

Anhand einer Zeichnung wird die Erfindung weiter erläutert.

Es zeigen:
- Fig. 1: eine schematische Draufsicht auf ein Zugfahrzeug eines Nutzfahrzeug-Gespanns mit einer Kamera eines Kamera-Monitor-Systems in einer Normalstellung während der Fahrt,
- Fig. 2: eine Darstellung entsprechend Fig. 1 mit einer eingefahrenen Kamera im Ruhezustand,
- Fig. 3: eine Darstellung gemäß Fig. 1 mit einer teilweise eingefahrenen Kamera bei Kollisionsgefahr,
- Fig. 4: die Zugmaschine nach Fig. 1 ergänzt zu einem Gespann mit angepasster Kameraposition für einen breiten Anhänger/ Auflieger,
- Fig. 5: das Gespann nach Fig. 4 mit angepasster Kameraposition in Kurvenfahrt nach rechts,
- Fig. 6: eine Darstellung entsprechend Fig. 5 mit Kurvenfahrt nach links,
- Fig. 7: eine Kamera an einer Kamerahalterung mit Linear-Stelleinrichtung, und
- Fig. 8: eine Kamera an einer Kamerahalterung mit Schwenk-Stelleinrichtung.

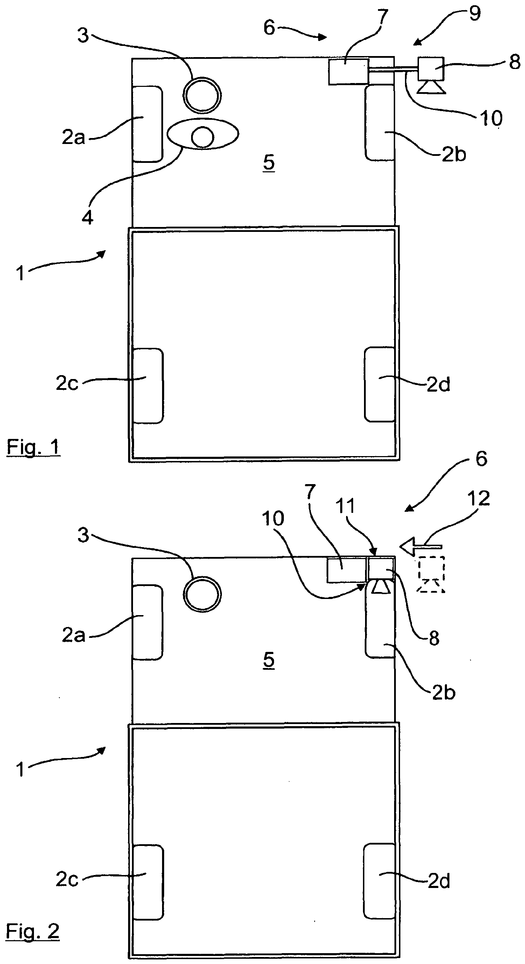

In Fig. 1 ist eine schematische Draufsicht auf ein Zugfahrzeug 1 eines Nutzfahrzeug-Gespanns 16 gezeigt mit vier Rädern 2a, 2b, 2c, 2d, einem Lenkrad 3 und einem Fahrer 4.

Im vorderen rechten beifahrerseitigen Eckbereich eines Fahrerhauses 5 ist als Spiegelersatzsystem ein Kamera-Monitor-System 6 angeordnet, welches schematisch durch einen Monitor 7 und eine nach rückwärts gerichtete Kamera 8 dargestellt ist.

Die Kamera 8 ist im Bereich einer A-Säule mittels einer Kamerahalterung 9 außen am Fahrerhaus 5 befestigt, wobei die Kamerahalterung 9 eine steuerbare Stelleinrichtung 10 aufweist, mit der die Kamera 8 situationsabhängig in verschiedene Abstandspositionen bezüglich des Fahrerhauses 5 verlagerbar ist. Die Stelleinrichtung 10 ist stark schematisiert als Linear-Stelleinrichtung ausgeführt, die etwa quer und horizontal zum Fahrzeug Kameraverstellungen ermöglicht.

In Fig. 1 ist die Kameraposition der Kamera 8 mittels der Stelleinrichtung 10 in eine Normalstellung während einer Fahrt eingestellt. Schematisch und beispielhaft ist hier die Kamera-Monitor-Anordnung beifahrerseitig rechts dargestellt. Eine alternative oder zusätzliche entsprechende Kamera-Monitor-Anordnung kann auch auf der linken Fahrerseite angeordnet und vom Schutz umfasst sein.

In Fig. 2 ist das Zugfahrzeug 1 im Ruhezustand (ohne Fahrer 4) dargestellt, in dem die Kamera 8 von der (strichliert eingezeichneten) Normalstellung zum Schutz vor Wetter, Diebstahl und Vandalismus in ein Aufnahmegehäuse 11 mittels der Stelleinrichtung 10 eingefahren ist (Pfeil 12).

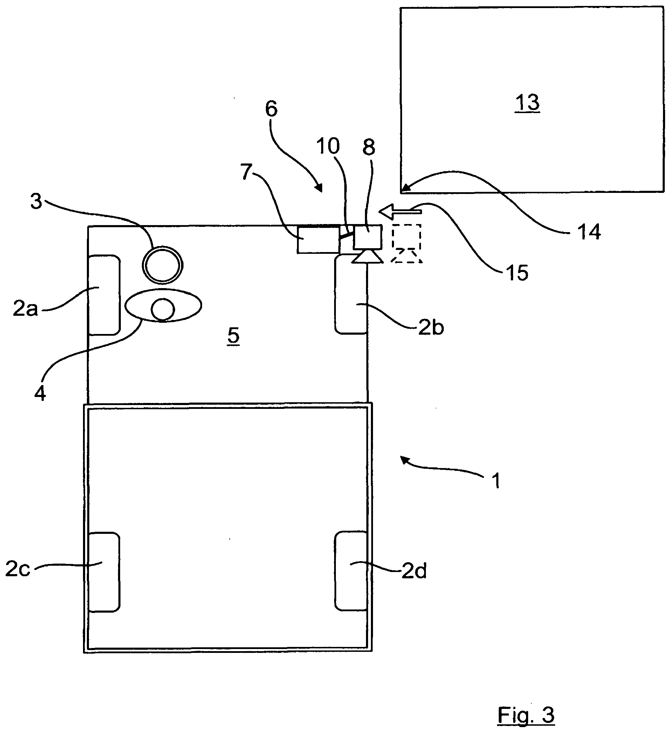

In Fig. 3 ist wiederum das Zugfahrzeug 1 schematisch entsprechend Fig. 1 dargestellt. Ersichtlich liegt hier in Fahrtrichtung ein (schematisch dargestelltes) Hindernis 13, welches in Fahrtrichtung mit seiner Ecke 14 auf Kollisionskurs mit der Kamera 8 in ihrer (strichliert eingezeichneten) Normalstellung liegt. Das Hindernis 13 kann sowohl ein ortsfester als auch bewegter Gegenstand sein. Die Kollisionsgefahr wird mittels Sensoren erfasst und erkannt und die Kamera 8 wurde ersichtlich bereits aus dem Kollisionsbereich nach Innen zum Fahrerhaus 5 hin zum Schutz vor Schäden an der Kamera 8 verlagert (Pfeil 15).

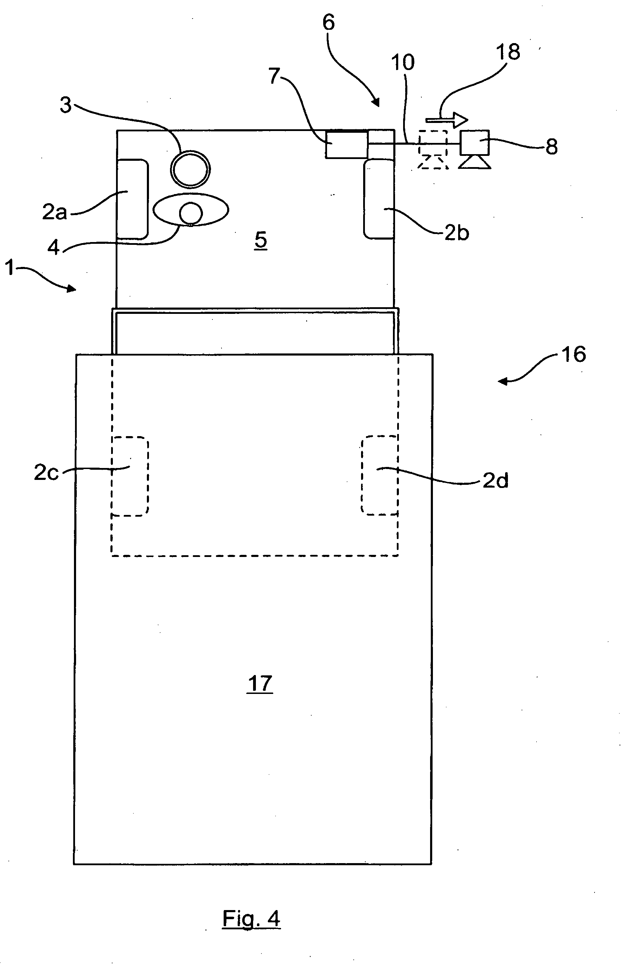

In Fig. 4 ist wiederum das Zugfahrzeug 1 als Teil eines Nutzfahrzeug-Gespanns 16 dargestellt mit einem gegenüber dem Zugfahrzeug 1 breiteren Anhänger/Auflieger 17. Diese Situation wird mittels Sensoren und/oder durch Auswertung fahrzeugseitiger Betriebsparameter erkannt und die Kamera 8 würde für eine bessere Übersicht von der (strichliert eingezeichneten) Normalposition in eine vorbestimmte weiter außen liegende Position verlagert (Pfeil 18). Bei einer Solo-Fahrt des Zugfahrzeugs 1 ohne Anhänger/Auflieger 17 wird die Kamera 8 dagegen in ihre Normalstellung zurückverlagert, wodurch wieder eine insgesamt geringere Fahrzeugbreite vorliegt.

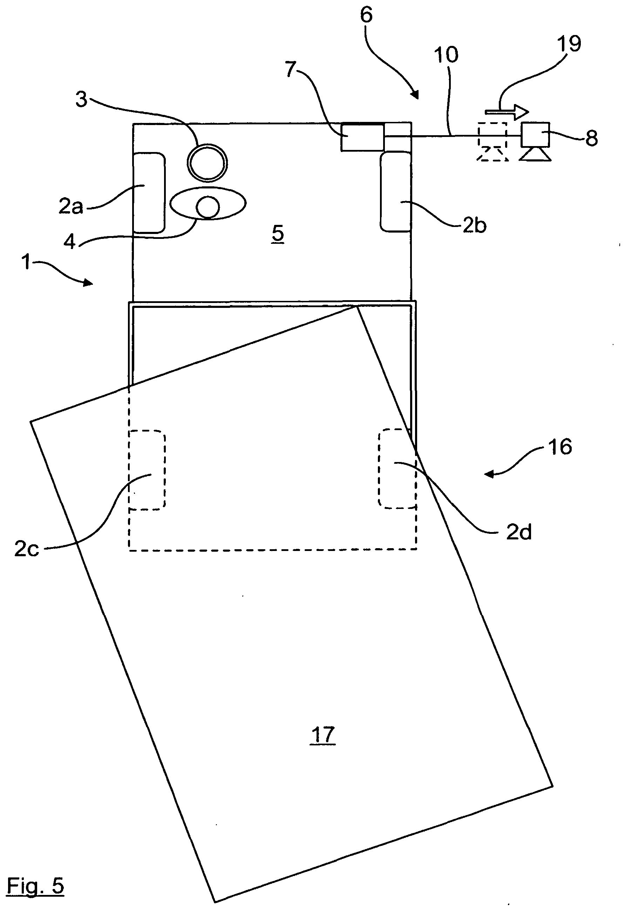

In Fig. 5 ist das Nutzfahrzeug-Gespann 16 nach Fig. 4 in einer detektierten Kurvenfahrt bei einer Rechtskurve dargestellt, wobei der hintere Bereich des Anhängers/Aufliegers 17 auf der Seite der Kamera 8 ausschert und damit die Sicht nach hinten weiter verdecken kann. Ersichtlich wurde hier die Kamera 8 mittels der Stelleinrichtung 10 gegenüber der (strichliert eingezeichneten) Kamerastellung aus Fig. 4 für eine verbesserte Übersicht nochmals weiter nach außen verlagert (Pfeil 19).

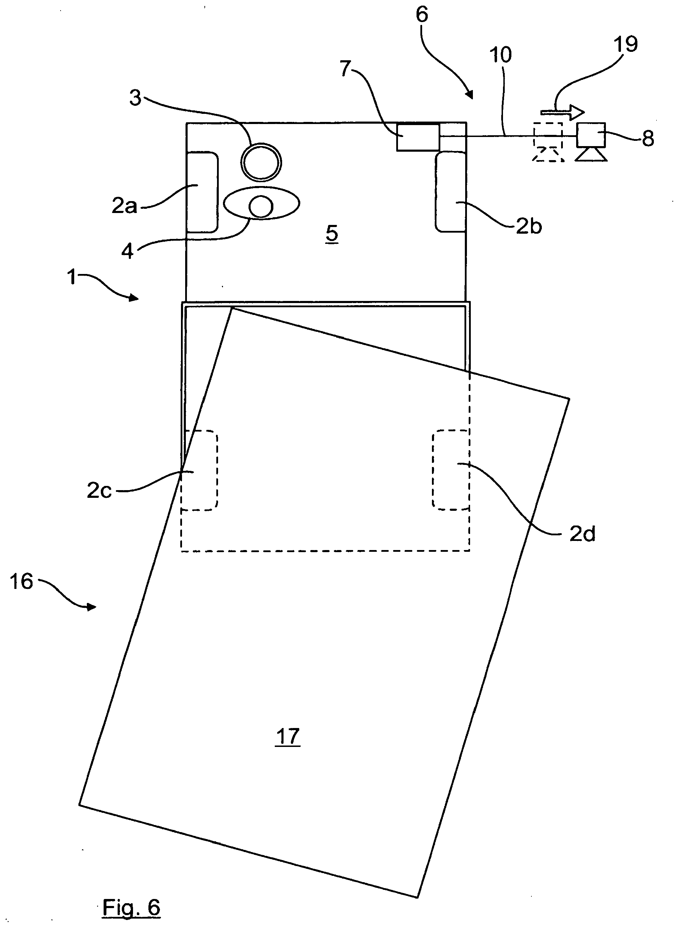

Eine entsprechende kurvenangepasste Kameraposition wird gemäß Fig. 6 auch bei einer detektierten Kurvenfahrt nach links für eine bessere Übersicht eingestellt, da hier der vordere Bereich des Anhängers/Aufliegers 17 ausschert.

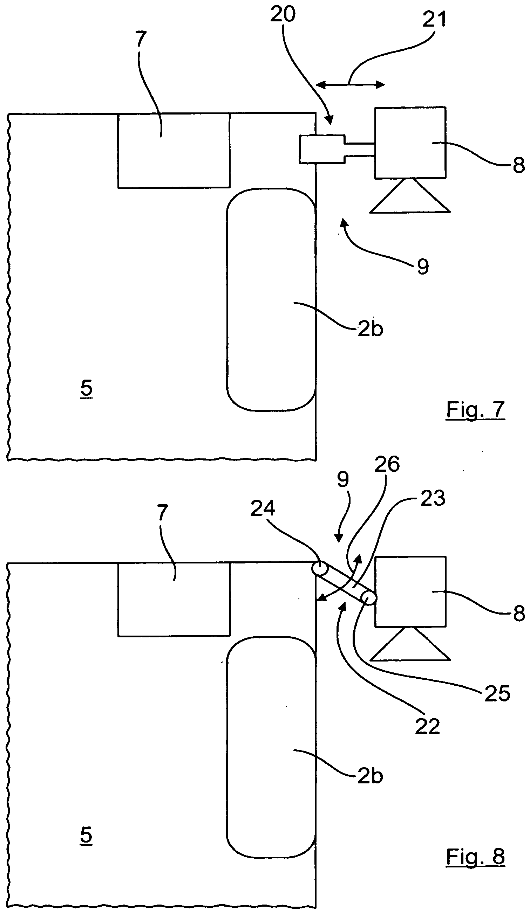

Fig. 7 zeigt vergrößert den vorderen rechten Bereich aus Fig. 1 mit einer Kamerahalterung 9, welche eine (schematisch gezeigte) Linear-Stelleinrichtung 20 aufweist, an der die Kamera 8 am freien Ende befestigt ist. Die Linear-Stelleinrichtung 20 kann verschieden in an sich bekannter Weise aufgebaut sein, beispielsweise als elektrisch und/oder hydraulisch und/oder pneumatisch betätigbare Teleskopeinheit, oder als Scherengestell, oder als Spindeltrieb, etc. (Doppel-Pfeil 20).

Fig. 8 entspricht Fig. 7 mit dem Unterschied, dass die Kamerahalterung 9 hier zur Verlagerung der Kamera 8 eine Schwenk-Stelleinrichtung 22 aufweist mit einer Gelenk-Stange 23, die mit einem endseitigen Gelenk 24 mit dem Fahrerhaus 5 verbunden ist. Die Kamera ist am freien Ende der Gelenk-Stange 23 an einem zweiten Gelenk 25 verschwenkbar gehalten (Doppel-Pfeil 26).

### Bezugszeichenliste

- 1: Zugfahrzeug
- 2a, 2b, 2c, 2d: Räder
- 3: Lenkrad
- 4: Fahrer
- 5: Fahrerhaus
- 6: Kamera-Monitor-System
- 7: Monitor
- 8: Kamera
- 9: Kamerahalterung
- 10: Stelleinrichtung
- 11: Aufnahmegehäuse
- 12: Pfeil
- 13: Hindernis
- 14: Ecke
- 15: Pfeil
- 16: Nutzfahrzeug-Gespann
- 17: Anhänger/Auflieger
- 18: Pfeil
- 19: Pfeil
- 20: Linear-Stelleinrichtung
- 21: Doppel-Pfeil
- 22: Schwenk-Stelleinrichtung
- 23: Gelenk-Stange
- 24: Gelenk
- 25: Gelenk
- 26: Doppel-Pfeil

## Patentansprüche

1. Verfahren zur Betätigung eines Kamera-Monitor-Systems (6) als Spiegelersatzsystem an einem Fahrzeug, insbesondere an einem Nutzfahrzeug,
mit wenigstens einer Kamera (8), die beidseitig oder einseitig außen am Fahrzeug (1) in Fahrzeuglängsrichtung gesehen nach rückwärts gerichtet mittels einer Kamerahalterung (9) befestigt ist,
wobei die Kamerahalterung (9) eine steuerbare Stelleinrichtung (10) aufweist, mit der die rückwärts gerichtete Kamera (8) situationsabhängig in verschiedene Abstands-Positionen bezüglich des Fahrzeugs (1) verlagert wird,
**dadurch gekennzeichnet,**
**dass** auch die Kameraausrichtung gesteuert einstellbar ist dergestalt, dass bei einer Verstellung der Kameraposition automatisch und gekoppelt auch die Kameraausrichtung geeignet nachjustiert wird, wenn die Kamera aus einer betriebsmäßigen Standardposition für den normalen Fahrbetrieb in eine andere Sichtposition verlagert wird.

2. Verfahren nach Anspruch 1, **dadurch gekennzeichnet, dass** die Steuereinheit für die Stelleinrichtung (10) manuell vom Fahrer (4) mittels einer Eingabetastatur für eine Verstellung der Kameraposition gesteuert wird, wobei bevorzugt auf der Eingabetastatur verstellrelevante Situationen für eine zugeordnete Positionsverstellung der Kamera (8) in Schrift- und/oder Symbolform angegeben sind.

3. Verfahren nach Anspruch 1, **dadurch gekennzeichnet,**
**dass** die Steuereinheit für die Stelleinrichtung (10) automatisch für eine Verstellung der Kameraposition gesteuert wird, dergestalt,
**dass** mittels Sensoren und/oder durch Auswertung fahrzeugseitiger Betriebsparameter verstellrelevante Situationen für eine zugeordnete Verstellung der Kameraposition erfasst und erkannt werden und die Stelleinrichtung (10) mittels der Steuereinheit entsprechend eingestellt wird.

4. Verfahren nach einem der Ansprüche 1 bis 3, **dadurch gekennzeichnet, dass** die Stelleinrichtung (10) eine Linear-Stelleinrichtung (20) ist, wobei bevorzugt vorgesehen ist, dass diese in etwa quer und/oder horizontal zum Fahrzeug (1) ausgerichtet ist.

5. Verfahren nach Anspruch 4, **dadurch gekennzeichnet, dass** die Kamera (8) mittels der Linear-Stelleinrichtung (20) bezüglich des Fahrzeugs (1) elektrisch und/oder hydraulisch und/oder pneumatisch aus- und eingefahren wird.

6. Verfahren nach einem der Ansprüche 1 bis 3, **dadurch gekennzeichnet, dass** die Stelleinrichtung (10) eine Schwenk-Stelleinrichtung (22) ist, mit der die Kamera (8) bezüglich des Fahrzeugs (1) elektrisch und/oder hydraulisch und/oder pneumatisch hin- und weggeschwenkt wird.

7. Verfahren nach Anspruch 6, **dadurch gekennzeichnet, dass** die Schwenk-Stelleinrichtung (22) eine Gelenkstange (23) aufweist, von der ein Ende über ein Stell-Gelenk (24) mit dem Fahrzeug (1) und das andere Ende mit einem Stell-Gelenk (25) mit der Kamera (8) verbunden ist.

8. Verfahren nach einem der vorhergehenden Ansprüche, **dadurch gekennzeichnet, dass** bei einem Außerbetriebsetzen des Fahrzeugs (1), insbesondere nach Abziehen eines Zündschlüssels, die Stelleinrichtung so angesteuert wird, dass die Kamera (8) ganz oder teilweise in ein Aufnahmegehäuse (11) am Fahrzeug (1) in eine Ruhestellung eingefahren und bei einer Aktivierung des Fahrzeugs und/oder bei einer Aktivierung durch den Fahrer aus dem Aufnahmegehäuse (11) in eine Fahrstellung ausgefahren wird.

9. Verfahren nach einem der vorhergehenden Ansprüche, **dadurch gekennzeichnet, dass** mittels wenigstens eines Sensors ein Hindernis (13) im Bewegungsweg der Kamera (8) erfasst und erkannt wird und dann die Stelleinrichtung (10) so angesteuert wird, dass die Kamera (8) zum Fahrzeug (1) hin aus dem Kollisionsbereich verlagert wird.

10. Verfahren nach einem der vorhergehenden Ansprüche, **dadurch gekennzeichnet, dass** mittels wenigstens einem Sensor und/oder wenigstens einem fahrzeugseitigen Betriebsparameter bei einem Gespann (16) aus Zugfahrzeug (1) und Anhänger/Auflieger (17) eine Kurvenfahrt und/oder ein Anhänger/Auflieger (17) der breiter als das Zugfahrzeug (1) ist, erfasst und erkannt wird und dann die Stelleinrichtung (10) so angesteuert wird, dass die Kamera (8) von einer Normalstellung in eine weiter außen liegende Position verlagert wird.

## Claims

1. Method for activating a camera monitor system (6) as a mirror replacement system on a vehicle, in particular on a utility vehicle,
with at least one camera (8) which is mounted on both sides or on one side of the outside of the vehicle (1), directed rearwards when viewed in the longitudinal direction of the vehicle, by means of a camera mount (9),
wherein the camera mount (9) has a controllable actuating device (10) with which the camera (8) which is directed rearwards is moved into different distance positions with respect to the vehicle (1) in accordance with the situation,
**characterized**
**in that** the orientation of the camera is also adjustable in a controlled fashion in such a way that when the camera position is adjusted automatically and coupled the camera orientation is also correspondingly suitably adjusted if the camera is moved from an operational standard position for a normal driving operation into a different viewing position.

2. Method according to Claim 1, **characterized in that** the control unit for the actuating device (10) is controlled manually by the driver (4) by means of an input keypad for adjustment of the camera position, wherein adjustment-relevant situations for an assigned position adjustment of the camera (8) are preferably specified in the form of lettering and/or symbols on the input keypad.

3. Method according to Claim 1, **characterized**
**in that** the control unit for the actuating device (10) is automatically controlled for an adjustment of the camera position in such a way
that adjustment-relevant situations for an assigned adjustment of the camera position are sensed and detected by means of sensors and/or by evaluation of vehicle-side operating parameters, and the actuating device (10) is correspondingly set by means of the control unit.

4. Method according to one of Claims 1 to 3, **characterized in that** the actuating device (10) is a linear actuating device (20), wherein there is preferably provision that the latter is oriented approximately transversely and/or horizontally with respect to the vehicle (1).

5. Method according to Claim 4, **characterized in that** the camera (8) is extended and retracted electrically and/or hydraulically and/or pneumatically with respect to the vehicle (1) by means of the linear actuating device (20).

6. Method according to one of Claims 1 to 3, **characterized in that** the actuating device (10) is a pivoting actuating device (22) with which the camera (8) is electrically and/or hydraulically and/or pneumatically pivoted inward and outward with respect to the vehicle (1).

7. Method according to Claim 6, **characterized in that** the pivoting actuating device (22) has a joint rod (23), one end of which is connected to the vehicle (1) via an actuating joint (24), and the other end is connected to the camera (8) with an actuating joint (25).

8. Method according to one of the preceding claims, **characterized in that** when the vehicle (1) is deactivated, in particular after an ignition key is pulled out, the actuating device is actuated in such a way that the camera (8) is moved entirely or partially into a receptacle housing (11) on the vehicle (1), into a position of rest, and when the vehicle is activated and/or when activation is carried out by the driver said camera (8) is extended out of the receptacle housing (11), into a driving position.

9. Method according to one of the preceding claims, **characterized in that** an obstacle (13) in the movement path of the camera (8) is sensed and detected by means of at least one sensor, and the actuating device (10) is then actuated in such a way that the camera (8) is moved towards the vehicle (1) and out of the collision area.

10. Method according to one of the preceding claims, **characterized in that** in the case of a vehicle combination (16) composed of a tractor vehicle (1) and a trailer/semitrailer (17), a cornering operation and/or a trailer/semitrailer (17) which is wider than the tractor vehicle (1) are/is sensed and detected by means of at least one sensor and/or at least one vehicle-side operating parameter, and the actuating device (10) is then actuated in such a way that the camera (8) is moved from a normal position into a position lying further towards the outside.

## Revendications

1. Procédé d'actionnement d'un système de caméra et moniteur (6) faisant office de système de substitution de rétroviseur sur un véhicule, notamment sur un véhicule utilitaire,
comprenant au moins une caméra (8) qui, vue dans la direction longitudinale du véhicule, est orientée vers l'arrière des deux côtés ou d'un côté à l'extérieur du véhicule (1) en étant fixée par un support de caméra (9),
le support de caméra (9) possédant un dispositif de réglage (10) contrôlable avec lequel la caméra (8) orientée vers l'arrière est déplacée en fonction de la situation dans différentes positions d'écart par rapport au véhicule (1),
**caractérisé en ce**
**que** l'orientation de la caméra est elle aussi réglable de manière contrôlée de telle sorte que lors d'un réglage de la position de la caméra, l'orientation de la caméra est elle aussi asservie de manière appropriée, automatiquement et par couplage, lorsque la caméra est déplacée d'une position standard conforme à son utilisation pour le régime de déplacement standard en une autre position de visualisation.

2. Procédé selon la revendication 1, **caractérisé en ce que** l'unité de commande pour le dispositif de réglage (10) est commandée manuellement par le conducteur (4) au moyen d'un clavier de saisie pour un réglage de la position de la caméra, des situations concernant le réglage pour un réglage de position associé de la caméra (8) étant de préférence indiquées sur le clavier de saisie sous la forme d'écriture et/ou de symboles.

3. Procédé selon la revendication 1, **caractérisé en ce que** l'unité de commande pour le dispositif de réglage (10) est commandée automatiquement pour un réglage de la position de la caméra de telle sorte que des situations concernant le réglage pour un réglage de position associé de la caméra sont détectées et reconnues au moyen de capteurs et/ou par interprétation de paramètres de fonctionnement côté véhicule et le dispositif de réglage (10) est réglé en conséquence au moyen de l'unité de commande.

4. Procédé selon l'une des revendications 1 à 3, **caractérisé en ce que** le dispositif de réglage (10) est un dispositif de réglage linéaire (20), en prévoyant de préférence que celui-ci est orienté approximativement transversalement et/ou horizontalement par rapport au véhicule (1).

5. Procédé selon la revendication 4, **caractérisé en ce que** la caméra (8) est sortie et rentrée par rapport au véhicule (1) de manière électrique et/ou hydraulique et/ou pneumatique au moyen du dispositif de réglage linéaire (20).

6. Procédé selon l'une des revendications 1 à 3, **caractérisé en ce que** le dispositif de réglage (10) est un dispositif de réglage pivotant (22) avec lequel la caméra (8) est pivotée en rapprochement ou en éloignement par rapport au véhicule (1) de manière électrique et/ou hydraulique et/ou pneumatique.

7. Procédé selon la revendication 6, **caractérisé en ce que** le dispositif de réglage pivotant (22) possède une tige articulée (23) dont une extrémité est reliée au véhicule (1) par le biais d'une articulation de réglage (24) et l'autre extrémité à la caméra (8) par une articulation de réglage (25).

8. Procédé selon l'une des revendications précédentes, **caractérisé en ce que** lors d'une mise hors service du véhicule (1), notamment après avoir retiré une clé de contact, le dispositif de réglage est commandé de telle sorte que la caméra (8) est entièrement ou partiellement rentrée dans un boîtier d'accueil (11) sur le véhicule (1) dans une position de repos et, lors d'une activation du véhicule et/ou lors d'une activation par le conducteur, est sortie du boîtier d'accueil (11) dans une position de déplacement.

9. Procédé selon l'une des revendications précédentes, **caractérisé en ce qu'**un obstacle (13) dans le trajet du mouvement de la caméra (8) est détecté et reconnu au moyen d'au moins un capteur et le dispositif de réglage (10) est alors commandé de telle sorte que la caméra (8) est décalée vers le véhicule (1) hors de la zone de collision.

10. Procédé selon l'une des revendications précédentes, **caractérisé en ce que** dans le cas d'un attelage (16) composé d'un véhicule tracteur (1) et d'une remorque/semi-remorque (17), une trajectoire en virage et/ou une remorque/semi-remorque (17) qui est plus large que le véhicule tracteur (1) est détecté et reconnu au moyen d'au moins un capteur et/ou d'au moins un paramètre de fonctionnement côté véhicule et le dispositif de réglage (10) est alors commandé de telle sorte que la caméra (8) est déplacée d'une position normale dans une position se trouvant plus loin à l'extérieur.
